# EUROPEAN PATENT SPECIFICATION

(11) **EP 4 182 238 B1**
(45) Date of publication and mention of the grant of the patent: **22.11.2023**
(21) Application number: 20797660.6
(22) Date of filing: 29.09.2020
(51) Int. Cl.: B65D 6/02, B65D 88/10, C12H 1/22, B65D 6/00

(54) **A WOODEN CASK FOR STORING AND AGING WINE AND OTHER BEVERAGES**
HOLZFASS ZUM LAGERN UND ALTERN VON WEIN UND ANDEREN GETRÄNKEN
FÛT EN BOIS POUR LE STOCKAGE ET LE VIEILLISSEMENT DU VIN ET D'AUTRES BOISSONS

(43) Date of publication of application: 24.05.2023
(73) Proprietor: Nejedlík, Tomás, 78815 Velké Losiny (CZ); Alt, Ernst Franz, 7130 Ilanz (CH)
(72) Inventor: VANEK, Ladislav, 67801 Blansko Klepacov (CZ)
(74) Representative: Kendereski, Dusan
(86) International application number: PCT/CZ2020/050071
(87) International publication number: WO 2022/037728

(56) References cited:
- WO-A1-98/45192
- WO-A1-2017/081596
- DE-U1- 8 524 246
- US-A- 663 591
- US-A- 4 093 099

## Description

### Field of the invention

This invention relates to a structure of a wooden cask of polyhedral shape for storing and aging beverages, in particular wine and spirits.

### Background of the invention

In the prior art, wooden casks or containers or barrels in the shape of a polyhedron (e.g. with six walls) for storing and aging beverages are known as an alternative to cylindrical barrels. The advantage of these multi-walled barrels is better spatial storage and better use of internal storage volumes.

The international patent application WO 9845192 A1 describes a wooden cask in the shape of a polyhedron for storing and aging beverages, which comprises a top, bottom, front, rear and two side panels assembled together to define an internal storage volume. There is a fill hole in the top panel near the front edge thereof and a drain hole in the front panel near the lower edge thereof, not contacting the internal face of the bottom panel. Thus, there is a space between the drain hole and the internal face of the bottom panel from which not all liquid can drain. The bottom panel is inclined downwards from the rear edge toward the front edge and the top panel is inclined upwards from the rear edge toward the front edge, with a roof-like depression in front of the inner side of the top panel from the central front-rear axis of the top panel to the side edges thereof for reducing the volume of residual air near the fill hole.

On the outer sides of the two opposite side panels, two combined pairs of vertical beams are arranged and functioning as buttresses, the ends of which do not extend beyond the lower or upper edge of the side panels. Each vertical beam is connected to another vertical beam positioned opposite the external face of the opposite side panel by a pair of compression rods, each compression rod connecting two opposite ends in a pair of associated vertical beams, thereby being able to exert a horizontal force tending to bring the opposite side panels together. Each end of the vertical beams is pierced with a horizontal through hole, and each side panel is pierced with a plurality of horizontal through holes, each being aligned with the adjacent horizontal through hole of the vertical beam, and the compression rods pass through the adjacent horizontal through holes. The compression rods extend over the top panel or below the bottom panel along their outer sides, and each compression rod is additionally sunk between the opposite side panels into a horizontal groove of a horizontal beam which is connected to the top or bottom panel by a dovetail joint. As a result, the compression rods are also in contact with the top, or bottom panels and also bring them together. In addition, each compression rod comprises two threaded ends to which a fixing nut is screwed.

The individual panels are connected to one another by means of sliding through dado joints with a right-angled tongue, which joints require additional U-shaped sealing elements enclosing the edges of the groove joint or sealing pins or tapes connecting the lower part of the groove to the edge of the panel to be slid into for watertight connection.

The international patent application WO 2007062690 A1 describes a wooden cask in the shape of a polyhedron for storing and aging beverages, which comprises a top, bottom, front, rear and two side panels assembled together to define an internal storage volume. The bottom panel can be tilted downwards from the rear edge toward the front edge.

On the outer sides of the two opposite side panels, a combined pair of vertical beams is arranged as supporting pillars in the shape of a hexagonal prism with rectangular bases and two trapezoidal walls perpendicular thereto, the ends of the vertical beams not extending over the lower or upper edge of the side panels. The rectangular base adjacent to the longer base of the trapezoidal side is at the same time proximal to the external face of the side panel, while the rectangular base adjacent to the shorter base of the trapezoidal side is at the same time distal to the external face of the side panel.

On the external face of the top and bottom panels, an associated pair of horizontal beams is arranged as supporting pillars in the shape of a hexagonal prism with rectangular bases and two trapezoidal walls perpendicular thereto, the ends of the horizontal beams not extending beyond the side edges of the top and bottom panels. The rectangular base adjacent to the shorter base of the trapezoidal side is at the same time proximal to the outer side of the top or the bottom panel, while the rectangular base adjacent to the longer base of the trapezoidal side is at the same time distal to the outer side of the top or bottom panel. In addition, the inclining side walls adjacent to the arms of the trapezoidal side are covered with a reinforcing metal layer.

Two oblique holes are drilled across each vertical beam for oblique fixing screws in a direction from the distal rectangular base to the proximal rectangular base extending substantially parallel to the arms of the trapezoidal sides so that one oblique hole faces through the hole in the side panel to the horizontal beam of the top panel and the other to horizontal beam of the bottom panel. The corresponding openings in the horizontal beams are located in the reinforcing metal layers on the inclining side walls. A total of four oblique fixing screws pass through these aligned holes, which are able to exert a pressing force with a tendency to press both side panels against the top or the bottom panel. The actual connection between the side panels with the top or the bottom panel is achieved by means of sliding through dado joints with a right-angled toothing (i.e. multiple tongues and grooves), which, however, require the use of these oblique fixing screws for sufficient watertightness.

The international patent application WO 2017081596 A1 describes a wooden cask in the shape of a polyhedron for storing and aging beverages, which comprises a top, bottom, front, rear and two side panels assembled together to define an internal storage volume. The top panel is tilted upwards from the rear edge toward the front edge, and the bottom panel is tilted downwards from the rear edge toward the front edge. There is a fill hole in the front panel near the upper edge thereof and a drain hole in the front panel near the lower edge thereof, but not in contact with the inner side of the lower panel. Thus, there is a space between the drain hole and the internal face of the bottom panel from which not all the liquid can drain.

The wooden cask further comprises three associated pairs of vertical beams, each of which has two ends, and which form a buttress opposite the outer sides of the two opposite side panels. The two ends of each vertical beam extend beyond the lower and upper edges of the side panel opposite the vertical beam. Each vertical beam is connected to another vertical beam positioned opposite the external face of the opposite side panel, thus forming a pair of associated vertical beams.

The wooden cask further comprises two compression rods per one pair of associated vertical beams. Within this pair, each end of the vertical beam is connected to the other end of the vertical beam by a single compression rod capable of exerting a horizontal force with a tendency to bring together opposite vertical beams and opposite side panels on which the two vertical beams rest. Each end of the vertical beams is pierced with a horizontal through hole, and each side panel is pierced with a plurality of horizontal through holes, each being aligned with the adjacent horizontal through hole of the vertical beam, wherein the compression rods pass through the adjacent horizontal through holes. In addition, the compression rods do not pass above the top panel or below the bottom panel along their outer sides but pass through horizontal openings drilled across the top and bottom panels, thereby compromising their integrity and strength.

The joints between the side panel and the top panel, or between the side panel and the bottom panel are achieved by means of sliding through dado joints with a stepped tongue. The disadvantage of this joint is the presence of grooves outside the joint on both sides, where dirt, sludge, mould or moisture can settle, and at the same time the lack of self-sealing ability after soaking the wood with the stored liquid.

The joints between the front panel and the top and bottom panel, or between the rear panel and the top and bottom panels are achieved by means of sliding through dado joints with a right-angled or stepped tongue. A part of this joint is also the compression rod itself, which is placed in horizontal openings drilled along said joint so that in both connected panels there is an additional groove corresponding to the shape of the compression rod, e.g. with circular or double-sided dovetail cross-section. The disadvantage of guiding the compression rod inside the joint is the impairment of its integrity, watertightness and strength, while in addition there is a risk of deflection of the top or the bottom panel in the middle, which exacerbates the following disadvantages.

The disadvantage of the above-cited arrangements is the leakage of the joints of the casks with impaired integrity and the leakage of the stored liquid, or the penetration of air into the cask, which causes oxidation of the stored beverage.

Another disadvantage is the need to use other sealing agents, such as sealing fabrics or silicones, which increase the complexity of the production and impair the organoleptic properties of the stored beverage (e.g. in contact with silicone).

Another disadvantage of the above-cited arrangements is that the drain hole in the front panel near the lower edge thereof is not in contact with the internal face of the bottom panel, and thus there is a space between the drain hole and the internal face of the bottom panel from which not all liquid can drain. Such irrecoverable residue causes problems during cleaning the cask.

Further similar wooden casks are known from US 4093099 A, DE 8524246 U1 and US 663591 A.

### Summary of the invention

The object of the invention is to provide a wooden cask construction for storing and aging wine and other beverages which allows the sealing of used joints due to liquid soaking in the wood, complete draining of the interior space, space saving and good storability and stackability, easy assembly and disassembly, while preventing leaks, aeration of the interior space and the formation of mould.

This objective is achieved by a wooden cask comprising a top panel, a bottom panel, a front panel, a rear panel and two side panels, at least two associated pairs of vertical beams, at least two compression rods per an associated pair of vertical beams, at least one fill hole and at least one drain hole.

Each panel is provided with external and internal substantially planar faces and all are assembled together to a polyhedral shape so as to define an internal storage volume. The front panel, the rear panel and the two side panels define an upper edge and a lower edge, further the top panel and the bottom panel define a front edge and a rear edge, and the front panel and the rear panel define two side edges. The top panel is inclined upwards from the rear edge towards the front edge at an angle α and the bottom panel is inclined downwards from the rear edge towards the front edge at an angle β.

Each vertical beam is connected to another vertical beam bearing against the external face of an opposite side panel, forming thereby a pair of associated vertical beams forming a buttress against the external faces of the two opposite side panels. Each vertical beam has two ends, i.e. a lower end and an upper end, wherein the two ends of each vertical beam extend beyond the lower and upper edges of the side panel against which the vertical beam is mounted.

Each end of the vertical beam is connected to another end of the vertical beam of a pair of associated vertical beams by means of one compression rod able to exert a horizontal force tending to bring together the opposite vertical beams of a pair of associated vertical beams and the opposite side panels against which these two vertical beams rest. Each end of the vertical beams is pierced by a horizontal through hole and each side panel is pierced by a plurality of horizontal through holes, each horizontal through hole of the side panel being aligned with the neighbouring horizontal through hole of the vertical beam, so that the compression rods pass through the neighbouring horizontal through holes.

The fill hole is arranged in the top panel near the front edge thereof and the drain hole is arranged in the front panel near the lower edge thereof.

The invention essentially discloses that the compression rods pass at a distance above the surface of the top panel along the external face thereof (i.e. without contacting the surface of the external face of the top panel) or below the bottom panel in the vicinity of the lower edges of the front, rear and/or side panels (i.e. without contacting or with contact to the surface of the external face of the bottom panel or the lower edge of the front, rear and/or side panels). The position of the compression rods approximately copies the tilt of the top and bottom panels, wherein the compression rods near the front edge of both the top and bottom panels pass through the horizontal through holes closer to both ends of the vertical beams than the horizontal through holes through which compression tie bars pass near the rear edge of the top and bottom panels. The space between the compression bars and the surface of the external face of the top, or of the bottom panel respectively, is important to facilitate the drainage of any residues of stored beverage or moisture, which prevents the formation of mould and deposits on the surface of the external face of the top or the bottom panel. This prevents liquid from being trapped in the space of the compression rods.

The invention essentially further discloses that the joints between the top panel and the front and rear panels and between the bottom panel and front and rear panels are four half-blind sliding half dovetail joints and that the joints between the front panel and the side panels and between the rear panel and the side panels are four chamfered dado joints. The advantage of the half-blind sliding half dovetail joint according to the invention over other commonly used joints is its self-sealing ability after soaking the wood with the stored liquid and maintaining the joint even after drying the wooden cask, and also the advantage of the chamfered dado joint is its self-sealing ability after soaking the wood with stored liquid.

A preferred arrangement of the compression rod passing below the bottom panel near the lower edge of the front panel is in a groove extending along the entire length of the lower edge of the front panel. The remaining compression rods passing below the bottom panel are preferably arranged at a distance from the surface of the external face thereof.

Preferably, each compression rod comprises two threaded ends, wherein a fixation means, in particular a nut provided with a washer or a fixation screw, is screwed to each threaded end, which results in strengthening the structure and function of the vertical beams as buttresses. To place the fixation means, there is a milled area in the horizontal through hole of the vertical beam on the outer side thereof, which allows the fixation means to be hidden inside the vertical beam, and thus allows better storage of two wooden casks arranged closer next to each other.

In a preferred embodiment, each half-blind sliding half dovetail joint comprises a half dovetail-shaped tail and a correspondingly half dovetail-shaped socket, wherein the half dovetail portion of each tail is oriented towards the external face of the bottom, front and/or rear panels, i.e. away or outwards from the internal storage volume. This arrangement ensures the sealing of the joints after soaking the wood with the stored liquid.

For the purpose of distinguishing, the individual components of these four half-blind sliding half dovetail joints are designated by attributes first to fourth. The first half-blind sliding half dovetail joint comprises a first half dovetail-shaped socket arranged on the internal face near the front edge of the top panel and a first half dovetail-shaped tail arranged on the upper edge of the front panel. The second half-blind sliding half dovetail joint comprises a second half dovetail-shaped socket arranged on the internal face near the rear edge of the top panel and a second half dovetail-shaped tail arranged on the upper edge of the rear panel. The third half-blind sliding half dovetail joint comprises a third half dovetail-shaped socket arranged on the internal face near the lower edge of the front panel and a third half dovetail-shaped tail arranged on the front edge of the bottom panel. The fourth half-blind sliding half dovetail joint comprises a fourth half dovetail-shaped socket arranged on the internal face near the lower edge of the rear panel and a fourth half dovetail-shaped tail arranged on the rear edge of the bottom panel.

In a preferred embodiment, each chamfered dado joint comprises a chamfered tail and a correspondingly chamfered socket, wherein the chamfered portion of each chamfered tail is oriented towards the external face of the front and/or rear panels, i.e. away or outwards from the internal storage volume. The chamfered dado joint is either a continuous though joint along the entire side edge of the front and/or rear panel, or a stopped joint near the lower edge of the front and/or rear panel.

For the purpose of distinguishing, the individual components of these four chamfered dado joints are designated by attributes first to fourth. The first chamfered dado joint comprises a first chamfered socket arranged on the internal face near the front edge of one of the side panels and a first chamfered tail arranged on one of side edges of the front panel. The second chamfered dado joint comprises a second chamfered socket arranged on the internal face near the rear edge of one of the side panels and a second chamfered tail arranged on one of side edges of the rear panel. The third chamfered dado joint comprises a third chamfered socket arranged on the internal face near the front edge of the other of the side panels and a third chamfered tail arranged on the other of side edges of the front panel. The fourth chamfered dado joint comprises a fourth chamfered socket arranged on the internal face near the rear edge of the other of the side panels and a fourth chamfered tail arranged on the other of side edges of the rear panel.

In a preferred embodiment, the top panel is inclined at an angle α in the range of 90.5° to 135°, in particular in the range of 90.5° to 100°, preferably e.g. 90.5°, 91°, 92°, 93°, 94°, 95°, 96°, 97°, 98°, 99° or 100° with respect to the internal side of the rear panel. Analogously, bottom panel is inclined at an angle β in the range of 90.5° to 135°, in particular in the range of 90.5° to 100°, preferably e.g. 90.5°, 91°, 92°, 93°, 94°, 95°, 96°, 97°, 98°, 99° or 100° with respect to the internal side of the rear panel. Particularly preferred values of the angles α and β are in the range of 92° to 96°, e.g. 94°. The inclination of the top panel makes it possible to ensure the highest point in the internal storage volume near the fill hole, which enables to fully control the content of residual air after filling the wooden cask with liquid. By analogy, the inclination of the bottom panel makes it possible to ensure the lowest place in the internal storage volume near the drain hole, whereby the wooden cask can be fully emptied without undesired residues of the stored liquid.

In a preferred embodiment, the dovetail angle γ of the half dovetail portion of each half dovetail-shaped tail with respect to the external face of the bottom, front and/or rear panels is in the range of 0.5° to 45°, in particular in the range of 5° to 25°, e.g. 5°, 6°, 7°, 8°, 9°, 10°, 11°, 12°, 13°, 14°, 15°, 16°, 17°, 18°, 19°, 20°, 21°, 22°, 23°, 24° or 25°. Particularly advantageous values of the angle γ are in the range 12° to 16°, e.g. 14°.

In a preferred embodiment, the chamfer angle δ of the chamfered portion of each chamfered tail with respect to the side edge of the front and/or rear panels is in the range of 91° to 179°, in particular in the range of 110° to 140°, e.g. 110°, 111°, 112°, 113°, 114°, 115°, 116°, 117°, 118°, 119°, 120°, 121°, 122°, 123°, 124°, 125°, 126°, 127°, 128°, 129°, 130°, 131°, 132°, 133°, 134°, 135°, 136°, 137°, 138°, 139° or 140°. Particularly preferred values of the angle δ are in the range 124° to 128°, e.g. 126°.

In a preferred embodiment, the fill hole is adapted to receive a fill neck terminated with a blinded nut with a cover, wherein a reverse (inverted) cone is arranged inside the fill neck, e.g. hollow or filled and made of wood, cork, silicone or stainless steel. Thanks to the reverse cone, excess liquid and air can be expelled from the internal storage volume, thus preventing aerobic processes during aging and storage of the beverage (e.g. wine oxidation). For even better venting, a de-aeration indentation is arranged between the fill hole and the corner of the internal face of the top panel and the internal face of the front panel on the internal face of the top panel, through which excess air or liquid can escape through the fill hole from the area of the first half-blind sliding half dovetail joint. Excess liquid can then run down the inclined top panel without being blocked by the compression rods. The fill hole is parallel in its vertical axis to the front panel, and not perpendicular to the inclined top panel.

In a preferred embodiment, the drain hole is threaded and adapted to receive a threaded neck, preferably fixed to the external face of the front panel by means of a flange. A cylindrical groove provided with a thread and adapted to receive a threaded neck is arranged in the internal face of the bottom panel near the front edge thereof, wherein the lower edge of the inner radius (diameter) of the threaded neck is in contact with and forms an uninterrupted continuation of the internal face of the bottom panel. The lower edge of the inner radius of the threaded neck thus forms the lowest point in the internal storage volume, whereby the liquid content of the internal storage volume is completely drained, so that no residual beverage is trapped in the area of the third half-blind sliding half dovetail joint. The drain hole is arranged in parallel to the lower edge of the front panel, and not in parallel to the inclined bottom panel. The threaded neck can be fitted with a plug, valve or other extension from the outside.

In a preferred embodiment, the top end of the vertical beam is fitted with a tenon and the bottom end of the vertical beam is fitted with a mortise to connect two vertical beams along their vertical axes, which allows the casks to be stored and stacked on top of each other. The tenon and the mortise are of conical frustum shape (a truncated cone) due to a better manipulable connection compared to cylindrical tenons and mortises.

The properties of the individual joints are significantly affected by the arrangement of the direction of the wood fibres in the individual panels, wherein the preferred arrangement of the wood fibres is perpendicular to the compression rods in the top and bottom panels, perpendicular to the vertical beams in the side panels and parallel to the side edges of the front and rear panels. The wooden cask is most often made of oak (or other) wood cut radially, so that after soaking the wood with liquid, the joints are stretched and sealed.

The top panel, bottom panel, front panel, rear panel and two side panels are constructed as battenboards made of strips joined with a longitudinal multiple tongue and groove joint. This longitudinal joint is formed (milled) along the entire length of the strips. The strips of the top and bottom panels are oriented perpendicular to the compression bars, the strips of both side panels are oriented perpendicular to the vertical beams and the strips of the front and rear panels are oriented parallel to their side edges, i.e. in accordance with the orientation of the wood fibres in individual panels. The multiple tongues and grooves themselves are formed by several interlocking teeth and comprise only right-angled faces without bevelled or chamfered surfaces, which advantageously ensures the expansion and sealing of said joints after soaking the wood with the stored liquid. The disadvantage of the bevelled or chamfered surfaces in this joint is their divergence after the wood has soaked up and the occurrence of leaks.

The wooden cask is assembled as follows:
1. sliding the front and rear panels into the half dovetail-shaped grooves in the top panel;
2. sliding the bottom panel into the half dovetail-shaped grooves in the front and rear panels;
3. sliding the side panels onto the chamfered tails of the front and rear panels;
4. providing the wooden cask with the vertical beams and the compression bars and tightening of the fixation means; and
5. fitting the fill and drain holes with other elements (fill neck, threaded neck, blinded nuts, cover, reverse cone, or plug or valve).

The reusability of the wooden cask after the liquid has been discharged is ensured by the technology of deposit milling (e.g. tartar) and tanning the internal faces of the wooden casks, i.e. the surfaces that have come into contact with the stored liquid, by means of flame or infrared radiation. After this treatment, the thickness of the individual panels will be reduced when reused, and therefore it is advantageous to ensure an increase of the internal faces by approx. 1 to 6 mm (approx. 4 to 25 %) during the first use of the wooden cask. This reuse is technologically demanding and unprofitable in the case of cylindrical barrels, and theoretically reduces the cost of producing one wooden cask (barrel) according to the invention by half.

### Brief description of the drawings

The essence of the invention is further illustrated on the basis of exemplary embodiments which are described with the aid of the accompanying drawings, where:
Fig. 1 shows a perspective view of the wooden cask according to the invention;
Fig. 2 shows a side view of the wooden cask according to the invention;
Fig. 3 shows a front view along the A-A section of Fig. 2 of the wooden cask according to the invention;
Fig. 4 shows a side view along the C-C section of Fig. 3 of the wooden cask according to the invention;
Fig. 5 shows a top view along the B-B section of Fig. 2 of the wooden cask according to the invention;
Fig. 6 shows a side view of detail I of Fig. 4 of the second half-blind sliding half dovetail joint between the rear and the top panels;
Fig. 7 shows a side view of detail H of Fig. 4 of the fourth half-blind sliding half dovetail joint between the rear and the bottom panels;
Fig. 8 shows a side view of detail J of Fig. 4 of the first half-blind sliding half dovetail joint between the front and the top panel and showing the fill hole;
Fig. 9 shows a side view of detail G of Fig. 4 of the third half-blind sliding half dovetail joint between the front and the bottom panel and showing the drain hole;
Fig. 10 shows a top view of detail E of Fig. 5 of the first chamfered dado joint between the front and the side panel;
Fig. 11 shows a side view of the half dovetail-shaped tail with a marked dovetail angle γ of the half dovetail portion of the tail;
Fig. 12 shows a top view of the chamfered tail with a marked chamfered angle δ of the chamfered portion of the tail; and
Fig. 13 shows a side view of the longitudinal multiple tongue and groove joint for joining of the strips in the battenboard construction.

### Exemplary embodiments of the invention

These embodiments illustrate exemplary embodiments of the invention, which, however, have no limiting effect on the scope of protection.

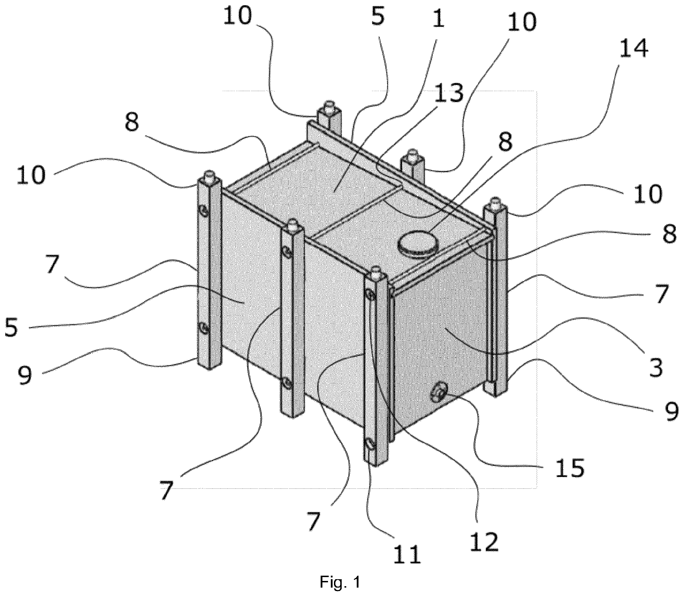

Fig. 1 shows a wooden cask in a perspective view that illustrates the front panel **3,** the top panel **1** and the side panels **5,** wherein the bottom panel **2** and the rear panel **4** are not visible in this view. The opposite side panels **5** are provided with three pairs of associated vertical beams **7** along the external faces thereof, which beams form buttresses or supporting pillars. Each vertical beam **7** has the bottom end **9** and the top end **10**, wherein the two ends **9, 10** of each vertical beam **7** extend beyond the lower and upper edges of the side panel **5** against which the vertical beam **7** is mounted. Within one pair of associated vertical beams **7,** the top and bottom ends **10, 9** are connected by a total of six compression bars **8** (three are shown) passing at a distance above the surface of the top panel **1** along the external face thereof and below the bottom panel **2** near the lower edges of the front, rear and/or side panels **3, 4, 5.** Each compression rod **8** comprises two threaded ends to which a fixation means (e.g. a nut with a washer) located in the milled area **11** adjoining the horizontal through hole **12** of the vertical beam **7** is screwed. The top end **10** is provided with a tenon **18** and the bottom end **9** is provided with a mortise **19** (not shown) for connecting two vertical beams **7** in their vertical axes. In the top panel **1** near the front edge thereof, there is a fill hole **14** and in the front panel **3** near the lower edge thereof, there is a drain hole **15.**

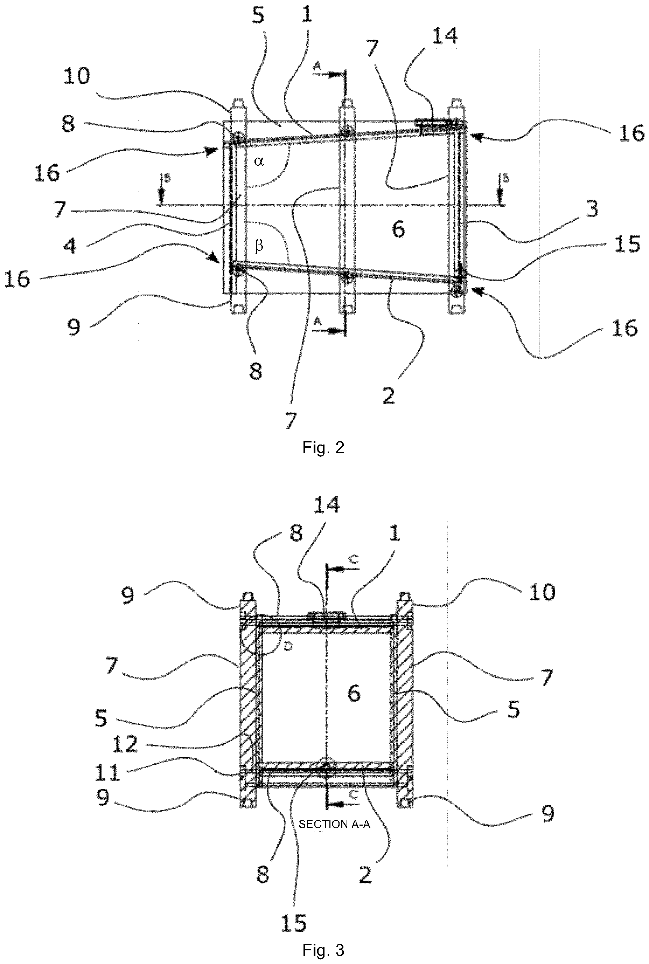

Fig. 2 shows a wooden cask in a side view from the outside of the side panel **5.** The top panel **1** is connected to the front panel **3** and the rear panel **4** by means of two half-blind sliding half dovetail joints **16** and the front panel **3** and the rear panel **4** are further connected to the bottom panel **2** by means of two further half-blind sliding half dovetail joints **16,** thus creating the internal storage volume **6.** The top panel **1** is further inclined upwards from the rear edge towards the front edge at an angle α (e.g. in the range of 92° to 96°) and the bottom panel **2** is inclined downwards from the rear edge towards the front edge at an angle β (e.g. in the range of 92° to 96°). The compression rods **8** extend at a distance above the surface of the top panel **1** along the external face thereof (i.e. without contact to the surface of the external face of the top panel **1**) or below the bottom panel **2** near the lower edges of the front, rear and/or side panels **3, 4, 5** (i.e. without or with contact to the surface of the external face of the bottom panel **2**). The position of the compression rods **8** thus approximately copies the inclination of the top and bottom panels **1**, **2.** In the case of vertical beams **7,** the tenons **18** at the top ends **10** and the mortises **19** at the bottom ends **9** are shown and the fill hole **14** and the drain hole **15** are also visible.

Fig. 3 shows a wooden cask in a front view along the AA section of Fig. 2, where the vertical beams **7** rest on the opposite side panels **5** and by means of the compression rods **8** passing via the horizontal through holes **12** and spaced above the surface of the top panel **1** along the external face thereof or below the bottom panel **2** near the lower edges of the front, rear and/or side panels **3, 4*,* 5,** they exert a horizontal force tending to bring the opposite vertical beams **7** and the opposite side panels **5** together. In the front view, the fill and drain holes **14, 15** are shown in the middle of the top panel **1,** or the front panel **3** respectively.

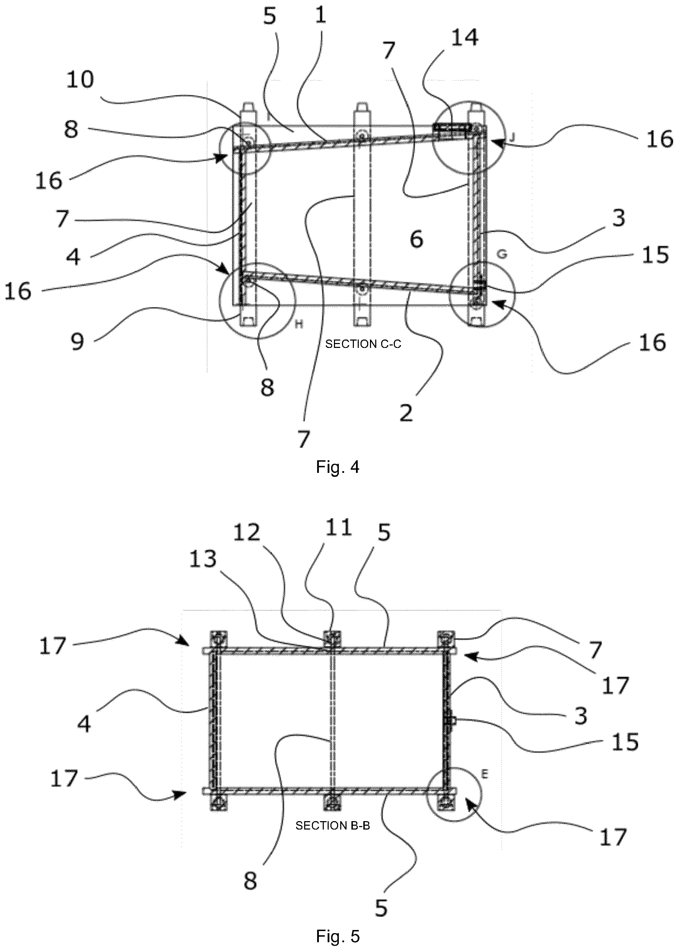

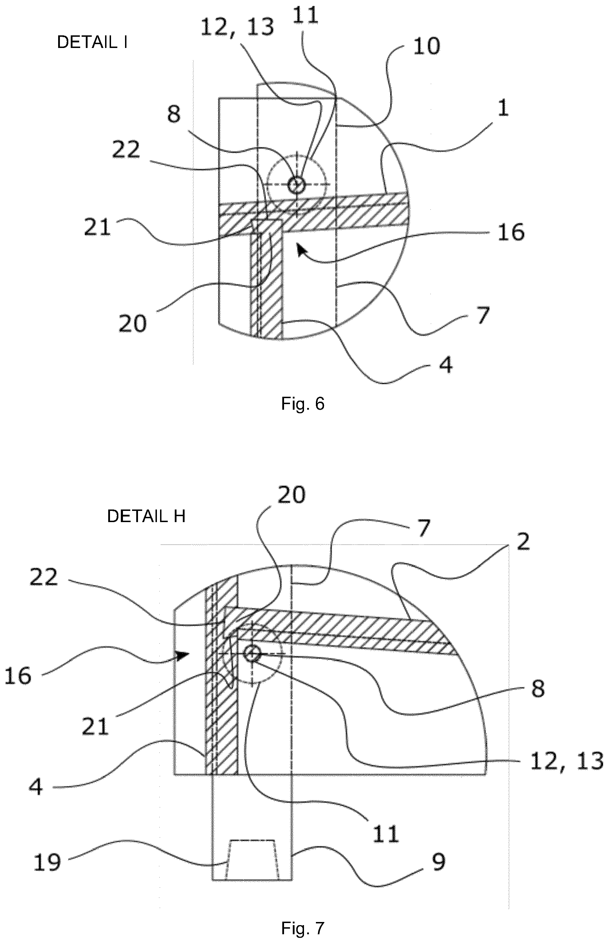

Fig. 4 shows a wooden cask in a side view along the C-C section of Fig. 3 and analogously to Fig. 2, wherein the individual half-blind sliding half dovetail joints **16** are indicated in more detail, see Figs. 6 to 9 below.

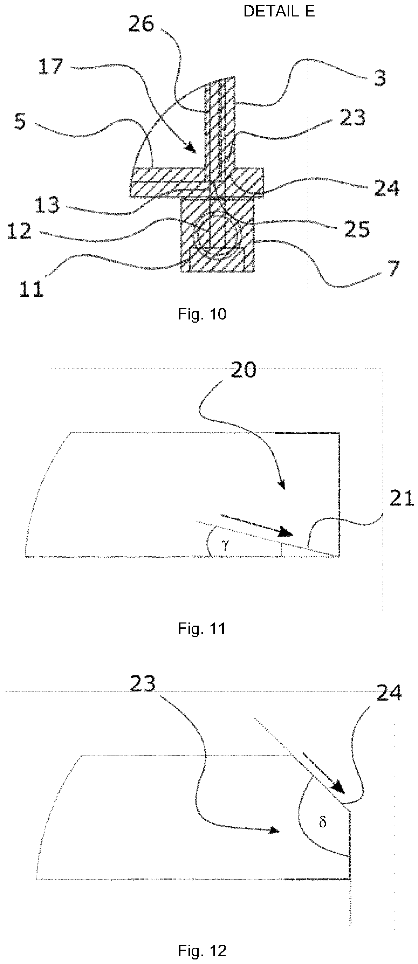

Fig. 5 shows a top view of the wooden cask along the B-B section of Fig. 2, where the vertical beams **7** rest on the opposite side panels **5** and exert a horizontal force by means of the compression rods **8** passing via the horizontal through holes **12** of vertical beams **7** and the horizontal through holes **13** of the side panels **5** which force tends to bring the opposite vertical beams **7** and the opposite side panels **5** together. The individual chamfered dado joints **17** are also indicated in more detail, see Fig. 10 below. In the top view, the drain hole **15** is shown in the middle of the front panel **3.**

Fig. 6 shows a side view in detail I of Fig. 4 of the second half-blind sliding half dovetail joint **16** between the rear panel **4** and the top panel **1,** wherein this joint **16** comprises the half dovetail-shaped tail **20** at the upper edge of the rear panel **4** and the corresponding half dovetail-shaped socket **22** on the internal face of the top panel **1** near the rear edge thereof. The half dovetail portion **21** of the tail **20** is oriented towards the external face of the rear panel **4**, i.e. pointing away or outwards from the internal storage volume **6.**

Fig. 7 shows a side view in detail H of Fig. 4 of the fourth half-blind sliding half dovetail joint **16** between the rear panel **4** and the bottom panel **2,** wherein this joint **16** comprises the half dovetail-shaped tail **20** at the rear edge of the bottom panel **2** and the corresponding half dovetail-shaped socket **22** on the internal face of the rear panel **4** near the lower edge thereof. The half dovetail portion **21** of the tail **20** is oriented towards the external face of the bottom panel **2,** i.e. pointing away or outwards from the internal storage volume **6.**

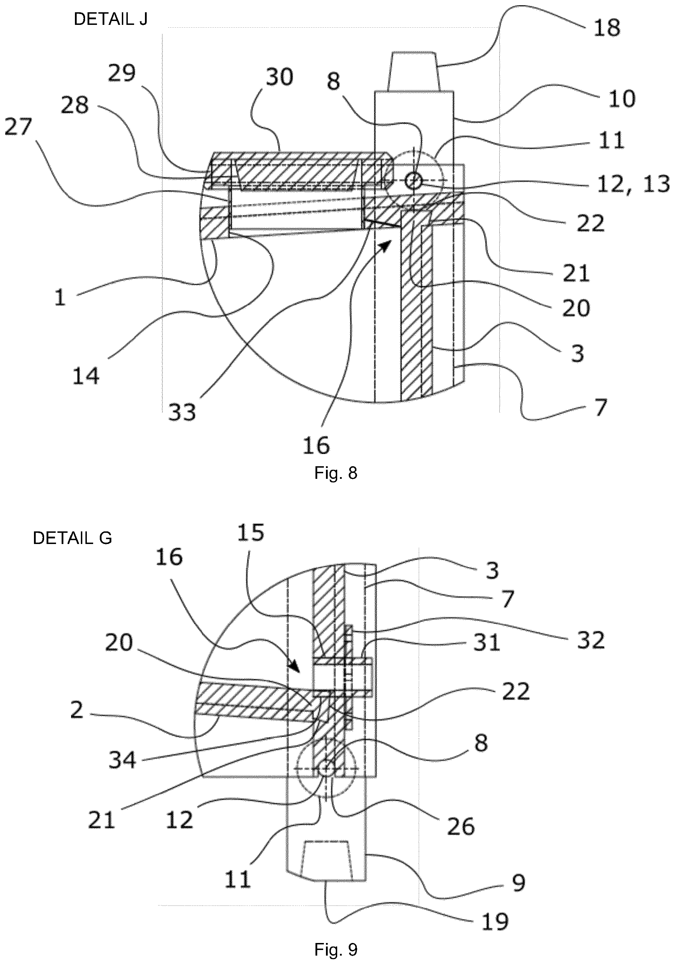

Fig. 8 shows a side view in detail J of Fig. 4 of the first half-blind sliding half dovetail joint **16** between the front panel **3** and the top panel **1,** wherein this joint **16** comprises the half dovetail-shaped tail **20** at the upper edge of the front panel **3** and the corresponding half dovetail-shaped socket **22** on the internal face of the top panel **1** near the front edge thereof. The half dovetail portion **21** of the tail **20** is oriented towards the external face of the front panel **3,** i.e. pointing away or outwards from the internal storage volume **6.** The fill hole **14** in the top panel **1** near the front edge thereof is further shown in more detail. The fill hole **14** is adapted to receive the fill neck **27** terminated by the blinded nut **29** with the cover **30,** wherein the reverse (inverted) cone **28** is arranged inside the fill neck **27** for expelling excess liquid and air from the internal storage volume **6.** The fill neck **27** can be secured by screws passing through the wall of the fill neck **27** into the top panel **1.** The fill hole **14** is parallel in its vertical axis to the front panel **3,** and not perpendicular to the inclined top panel **1.** For even better venting, the de-aeration indentation **33** is arranged between the fill hole **14** and the corner of the internal face of the top panel **1** and the internal face of the front panel **3** on the internal face of the top panel **1,** through which excess air or liquid can escape through the fill hole **14** from the area of the first half-blind sliding half dovetail joint **16.**

Fig. 9 shows a side view in detail G of Fig. 4 of the third half-blind sliding half dovetail joint **16** between the front panel **3** and the bottom panel **2,** wherein this joint **16** comprises the half dovetail-shaped tail **20** at the front edge of the bottom panel **2** and the corresponding half dovetail-shaped socket **22** on the internal face of the front panel **3** near the lower edge thereof. The half dovetail portion **21** of the tail **20** is oriented towards the external face of the bottom panel **2,** i.e. pointing away or outwards from the internal storage volume **6.** Also, the groove **26** for the compression rod **8** is shown in the lower edge of the front panel 3, through which groove passes the compression rod **8** below the bottom panel **2** near the lower edge of the front panel **3.** The drain hole **15** in the front panel **3** near the lower edge thereof is further shown in more detail. The drain hole **15** is threaded and is adapted to receive the threaded neck **31** that can be fastened by the flange **32** on the external face of the front panel **3.** In the internal face of the bottom panel 2 near the front edge thereof, the threaded cylindrical groove **34** is arranged and adapted to receive the threaded neck **31,** wherein the lower edge of the inner radius (diameter) of the threaded neck **31** contacts and seamlessly adjoins the internal face of the bottom panel **2.** The drain hole **15** is arranged in parallel to the lower edge of the front panel **3,** and not in parallel to the inclined bottom panel **2.**

Fig. 10 shows a top view in detail E of Fig. 5 of the first chamfered dado joint **17** between the front panel **3** and the side panel **5,** wherein this joint **17** comprises the chamfered tail **23** and the corresponding chamfered socket **25.** The chamfered portion **24** of the tail **23** is oriented towards the external face of the front panel **3,** i.e. pointing away or outwards from the internal storage volume **6.** Further to be seen is the alignment of the groove 26 for the pulling rod **8,** the horizontal through hole **13** of the side panel **5** and the horizontal through hole **12** of the vertical beam **7** together with the milled area **11** for locating the fixation means for the pulling rod **8.**

Fig. 11 shows a side view of the half dovetail-shaped tail **20** with a marked dovetail angle y of the half-dovetail portion **21** of this tail **20** (e.g. in the range of 12° to 16°). The self-sealing ability of the half dovetail joint **16** is due to the fact that after soaking the wood with the stored liquid, the half dovetail-shaped tail **20** expands and moves slightly along the inclined surface of the half-dovetail portion **21** towards the half dovetail-shaped socket **22** (see arrow in Fig. 11). Thus, the sealing itself occurs on the right-angled surfaces of the half dovetail-shaped tail **20,** which are opposite to the surface of the half-dovetail portion **21** and are highlighted by a broken line. In comparison, the above-mentioned sealing of both right-angled surfaces of the half dovetail-shaped tail **20** oriented towards the internal face of the internal storage volume **6** cannot be achieved with other half-blind T-shaped joints (e.g. a full dovetail joint, a right-angled groove joint, a right-angled or a bevelled dado joint, a tongue and groove joint or a joint reinforced with biscuits etc.).

Analogously, Fig. 12 shows a top view of the chamfered tail **23** with a marked chamfer angle δ of the chamfered portion **24** of the tail **23** (e.g. in the range 124° to 128°). The self-sealing ability of the chamfered dado joint **17** is due to the fact that after the wood has been soaked with the stored liquid, the chamfered tail **23** expands and moves slightly along the inclined surface of the chamfered portion **24** towards the chamfered socket **25** (see arrow in Fig. 12). Thus, the sealing itself occurs on the right-angled surfaces of the chamfered tail **23,** which are opposite to the surface of the chamfered portion **24** and are highlighted by a broken line. In comparison, the above-mentioned sealing of both right-angled surfaces of the chamfered tail **23** oriented towards the internal face of the internal storage volume **6** cannot be achieved with other T-shaped grooved joints (e.g. a right-angled dado joint or a bevelled dado joint without right angles etc.). Compared to full dovetail or half dovetail joints, the chamfered dado joint **17** can be easily disassembled after removing the compression rods **8** and the vertical beams **7,** whereby the side panels **5** can be easily disassembled for cleaning and reuse.

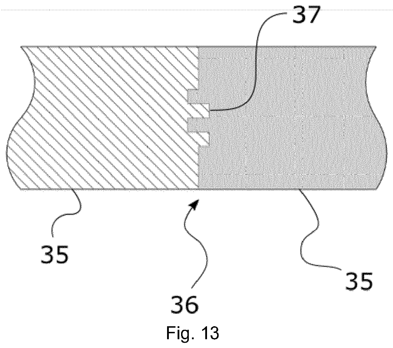

Fig. 13 shows the construction of the battenboard made of the strips **35** joined with a longitudinal multiple tongue and groove **37** joint **36.** This battenboard is used in all panels **1, 2, 3, 4** and **5.** This longitudinal joint **36** is formed (milled) along the entire length of the strips **35.** The multiple tongues and grooves **37** themselves are formed by several interlocking teeth and comprise only right-angled faces without bevelled or chamfered surfaces, which advantageously ensures the expansion and sealing of said joint after soaking the wood with the stored liquid.

### Industrial applicability

The wooden cask according to the invention can be used for storing and aging wine and spirits. After disposal, the wooden cask can be disassembled, and the individual wooden parts used in furniture industry or for parquet production.

### List of reference signs

1 top panel
2 bottom panel
3 front panel
4 rear panel
5 side panel
6 internal storage volume
7 vertical beam
8 compression rod
9 lower end of the vertical beam 7
10 upper end of the vertical beam 7
11 milled area
12 horizontal through hole of the vertical beam 7
13 horizontal through hole of the side panel 5
14 fill hole
15 drain hole
16 half-blind sliding half dovetail joint
17 chamfered dado joint
18 tenon
19 mortise
20 half dovetail-shaped tail
21 half dovetail portion of the tail 20
22 half dovetail-shaped socket
23 chamfered tail
24 chamfered portion of the tail 23
25 chamfered socket
26 groove for the compression rod 8
27 fill neck of the fill hole 14
28 blinded nut of the fill hole 14
29 reverse cone of the fill hole 14
30 cover of the fill hole 14
31 threaded neck of the drain hole 15
32 flange of the drain hole 15
33 de-aeration indentation
34 cylindrical groove
35 strip
36 tongue and groove joint
37 tongues and grooves
α inclination angle of the top panel 1
β inclination angle of the bottom panel 2
γ dovetail angle of the half dovetail portion 21
δ chamfer angle of the chamfered portion 24

## Claims

1. A wooden cask for storing and aging wine and other beverages, comprising:
a. a top panel (1), a bottom panel (2), a front panel (3), a rear panel (4) and two side panels (5), each provided with external and internal substantially planar faces and all assembled together so as to define an internal storage volume (6), wherein the front panel (3), the rear panel (4) and the two side panels (5) define an upper edge and a lower edge, further the top panel (1) and the bottom panel (2) define a front edge and a rear edge, and the front panel (3) and the rear panel (4) define two side edges, and wherein the top panel (1) is inclined upwards from the rear edge towards the front edge and the bottom panel (2) is inclined downwards from the rear edge towards the front edge;
b. at least two associated pairs of vertical beams (7), each having two ends (9, 10) and forming a buttress against the external faces of the two opposite side panels (5), wherein each vertical beam (7) is connected to another vertical beam (7) bearing against the external face of an opposite side panel (5), forming thereby a pair of associated vertical beams (7);
c. at least two compression rods (8) per an associated pair of vertical beams (7), wherein each end (9, 10) of the vertical beam (7) is connected to another end (9, 10) of the vertical beam (7) of a pair of associated vertical beams (7) by means of one compression rod (8) able to exert a horizontal force tending to bring together the opposite vertical beams (7) of a pair of associated vertical beams (7) and the opposite side panels (5) against which these two vertical beams (7) rest, wherein each end (9, 10) of the vertical beams (7) is pierced by a horizontal through hole (12) and each side panel (5) is pierced by a plurality of horizontal through holes (13), each horizontal through hole (13) being aligned with the neighbouring horizontal through hole (12) of the vertical beam (7), wherein the compression rods (8) pass through the neighbouring horizontal through holes (12, 13); and
d. at least one fill hole (14) in the top panel (1) near the front edge thereof and at least one drain hole (15) in the front panel (3) near the lower edge thereof;
**characterised in that** the two ends (9, 10) of each vertical beam (7) extend beyond the lower and upper edges of the side panel (5) against which the vertical beam (7) is mounted,
wherein the compression rods (8) pass at a distance above the surface of the top panel (1) along the external face thereof or below the bottom panel (2) in the vicinity of the lower edges of the front, rear and/or side panels (3, 4, 5),
wherein the joints between the top panel (1) and the front and rear panels (3, 4) and between the bottom panel (2) and front and rear panels (3, 4) are four half-blind sliding half dovetail joints (16), and
wherein the joints between the front panel (3) and the side panels (5) and between the rear panel (4) and the side panels (5) are four chamfered dado joints (17).

2. The wooden cask according to claim 1, **characterised in that** the compression rod (8) passing below the bottom panel (2) in the vicinity of the lower edge of the front panel (3) is inserted in a groove (26) extending along the lower edge of the front panels (3).

3. The wooden cask according to claim 1 or 2, **characterised in that** each compression rod (8) comprises two threaded ends, wherein a fixation means, in particular a nut or a fixation screw, is screwed to each threaded end.

4. The wooden cask according to claim 3, **characterised in that** the horizontal through hole (12) of the vertical beam (7) comprises a milled area (11) to accommodate the fixation means.

5. The wooden cask according to claim 1, **characterised in that** each half-blind sliding half dovetail joint (16) comprises a half dovetail-shaped tail (20) and a correspondingly half dovetail-shaped socket (22), wherein the half dovetail portion (21) of each tail (20) is oriented towards the external face of the bottom, front and/or rear panels (2, 3, 4).

6. The wooden cask according to claim 5, **characterised in that** a first half-blind sliding half dovetail joint (16) comprises a first half dovetail-shaped socket (22) arranged on the internal face near the front edge of the top panel (1) and a first half dovetail-shaped tail (20) arranged on the upper edge of the front panel (3),
a second half-blind sliding half dovetail joint (16) comprises a second half dovetail-shaped socket (22) arranged on the internal face near the rear edge of the top panel (1) and a second half dovetail-shaped tail (20) arranged on the upper edge of the rear panel (4),
a third half-blind sliding half dovetail joint (16) comprises a third half dovetail-shaped socket (22) arranged on the internal face near the lower edge of the front panel (3) and a third half dovetail-shaped tail (20) arranged on the front edge of the bottom panel (2), and
a fourth half-blind sliding half dovetail joint (16) comprises a fourth half dovetail-shaped socket (22) arranged on the internal face near the lower edge of the rear panel (4) and a fourth half dovetail-shaped tail (20) arranged on the rear edge of the bottom panel (2).

7. The wooden cask according to claim 1, **characterised in that** each chamfered dado joint (17) comprises a chamfered tail (23) and a correspondingly chamfered socket (25), wherein the chamfered portion (24) of each tail (23) is oriented towards the external face of the front and/or rear panels (3, 4), wherein the chamfered dado joint (17) either is a through joint along the entire side edge of the front and/or rear panel (3, 4), or a stopped joint near the lower edge of the front and/or rear panel (3, 4).

8. The wooden cask according to claim 7, **characterised in that** a first chamfered dado joint (17) comprises a first chamfered socket (25) arranged on the internal face near the front edge of one of the side panels (5) and a first chamfered tail (23) arranged on one of side edges of the front panel (3),
a second chamfered dado joint (17) comprises a second chamfered socket (25) arranged on the internal face near the rear edge of one of the side panels (5) and a second chamfered tail (23) arranged on one of side edges of the rear panel (4), a third chamfered dado joint (17) comprises a third chamfered socket (25) arranged on the internal face near the front edge of the other of the side panels (5) and a third chamfered tail (23) arranged on the other of side edges of the front panel (3), and
a fourth chamfered dado joint (17) comprises a fourth chamfered socket (25) arranged on the internal face near the rear edge of the other of the side panels (5) and a fourth chamfered tail (23) arranged on the other of side edges of the rear panel (4).

9. The wooden cask according to claim 1, **characterised in that** the top panel (1) is inclined at an angle α in the range of 90.5° to 135°, in particular in the range of 90.5° to 100° with respect to the internal side of the rear panel (4), wherein the bottom panel (2) is inclined at an angle β in the range of 90.5° to 135°, in particular in the range of 90.5° to 100° with respect to the internal side of the rear panel (4),

10. The wooden cask according to claims 1, 5 or 6, **characterised in that** the dovetail angle γ of the half dovetail portion (21) of each tail (20) with respect to the external face of the bottom, front and/or rear panels (2, 3, 4) is in the range of 0.5° to 45°, in particular in the range of 5° to 25°.

11. The wooden cask according to claims 1, 7 or 8, **characterised in that** the chamfer angle δ of the chamfered portion (24) of each tail (23) with respect to the side edge of the front and/or rear panels (3, 4) is in the range of 91° to 179°, in particular in the range of 110° to 140°.

12. The wooden cask according any one of the preceding claims, **characterised in that** the fill hole (14) is adapted to receive a fill neck (27) terminated with a blinded nut (28) with a cover (30), wherein a reverse cone (29) is arranged inside the fill neck (27), wherein the vertical axis of the fill hole (14) is in parallel to the front panel (3).

13. The wooden cask according to claim 12, **characterised in that** a de-aeration indentation (33) is arranged in the internal face of the top panel (1) between the fill hole (14) and the corner of the internal faces of the top and front panels (1, 3).

14. The wooden cask according to any one of the preceding claims, **characterised in that** the drain hole (15) is threaded and adapted to receive a threaded neck (31) fastenable to the external face of the front panel (3) by means of a flange (32), wherein a threaded cylindrical groove (34) is arranged in the internal face of the bottom panel (2) near the front edge thereof and adapted to receive the threaded neck (31), wherein the lower edge of the inner radius of the threaded neck (31) is in contact with and forms an uninterrupted continuation of the internal face of the bottom panel (2), wherein the drain hole (15) is arranged in parallel to the lower edge of the front panel (3).

15. The wooden cask according to any one of the preceding claims, **characterised in that** the top end (10) of the vertical beam (7) is fitted with a tenon (18) and the bottom end (9) of the vertical beam (7) is fitted with a mortise (19) to connect two vertical beams (7) along their vertical axes, wherein the tenon (18) and the mortise (19) are of conical frustum shape.

16. The wooden cask according to any one of the preceding claims, **characterised in that** the top panel (1), the bottom panel (2), the front panel (3), the rear panel (4) and the two side panels (5) are constructed as battenboards made of strips (35) joined with a longitudinal multiple tongue and groove (37) joint (36), wherein the strips (35) of the top and bottom panels (1, 2) are oriented perpendicular to the compression rods (8), the strips (35) of the two side panels (5) are oriented perpendicular to the vertical beams (7) and the strips (35) of the front and rear panels (3, 4) are oriented parallel to the side edges thereof, and wherein the multiple tongues and grooves (37) comprise only right-angled faces.

## Patentansprüche

1. Ein Holzfass zum Lagern und Altern von Wein und anderen Getränken, umfassend:
a. eine obere Platte (1), eine untere Platte (2), eine vordere Platte (3), eine hintere Platte (4) und zwei Seitenplatten (5), die jeweils mit äußeren und inneren im Wesentlichen planaren Flächen versehen sind und alle zusammengesetzt sind, um ein internes Speichervolumen (6) zu definieren, wobei die vordere Platte (3), die hintere Platte (4) und die zwei Seitenplatten (5) eine obere Kante und eine untere Kante definieren, ferner die obere Platte (1) und die untere Platte (2) eine vordere Kante and eine hintere Kante definieren, und die vordere Platte (3) und die hintere Platte (4) zwei Seitenkanten definieren, und wobei die obere Platte (1) von der hinteren Kante nach oben zur vorderen Kante geneigt ist und die untere Platte (2) von der hinteren Kante nach unten zur vorderen Kante geneigt ist;
b. mindestens zwei zugeordnete Paare von Vertikalträgern (7), die jeweils zwei Enden (9, 10) aufweisen und ein Widerlager gegen die Außenflächen der beiden gegenüberliegenden Seitenplatten (5) bilden, wobei jeder Vertikalträger (7) mit einem weiteren Vertikalträger (7) verbunden ist, der an der Außenseite einer gegenüberliegenden Seitenwand (5) anliegt, wodurch ein Paar von zugeordneten Vertikalträgern (7) gebildet wird;
c. mindestens zwei Druckstangen (8) pro einem zugeordneten Paar Vertikalträgern (7), wobei jedes Ende (9, 10) des Vertikalträgers (7) mit einem anderen Ende (9, 10) des Vertikalträgers (7) eines Paares von zugeordneten Vertikalträgern (7) mittels einer Druckstange (8) verbunden ist, die dazu neigt, die gegenüberliegenden Vertikalträger (7) eines Paares von zugeordneten Vertikalträgern (7) und die gegenüberliegenden Seitenplatten (5), gegen die diese beiden Vertikalträger (7) aufliegen, zusammenzubringen, wobei jedes Ende (9, 10) der Vertikalträger (7) durch ein horizontales Durchgangsloch (12) durchstochen wird und jede Seitenplatte (5) durch eine Vielzahl von horizontalen Durchgangslöchern (13) durchstochen wird, wobei jedes horizontale Durchgangsloch (13) mit dem benachbarten horizontalen Durchgangsloch (12) des Vertikalträgers (7) ausgerichtet ist, wobei die Druckstangen (8) durch die benachbarten horizontalen Durchgangslöcher (12, 13) verlaufen; und
d. mindestens ein Füllloch (14) in der oberen Platte (1) nahe dessen vorderen Kante und mindestens ein Ablaufloch (15) in der vorderen Platte (3) nahe dessen unteren Kante;
**dadurch gekennzeichnet, dass** sich die beiden Enden (9, 10) jedes Vertikalträgers (7) über der unteren und oberen Kante der Seitenplatte (5), an der der Vertikalträger (7) gelagert ist, hinaus erstrecken,
wobei die Druckstänge (8) in einem Abstand oberhalb der Oberfläche der oberen Platte (1) entlang ihrer Außenseite oder unterhalb der unteren Platte (2) nahe der unteren Kanten der vorderen, hinteren und/oder Seitenplatten (3, 4, 5) verlaufen,
wobei die Verbindungen zwischen der oberen Platte (1) und der vorderen und hinteren Platte (3, 4) und zwischen der unteren Platte (2) und der vorderen und hinteren Platte (3, 4) vier Halbblindschiebe-Halbschwalbenschwanzverbindungen (16) sind, und
wobei die Verbindungen zwischen der vorderen Platte (3) und den Seitenplatten (5) und zwischen der hinteren Platte (4) und den Seitenplatten (5) vier angefaste Nutverbindungen (17) sind.

2. Das Holzfass nach Anspruch 1, **dadurch gekennzeichnet, dass** die Druckstange (8), die unterhalb der unteren Platte (2) im Bereich der unteren Kante der vorderen Platte (3) verläuft, in eine Nut (26), die sich entlang der unteren Kante der vorderen Platte (3) erstreckt, eingesetzt ist.

3. Das Holzfass nach Anspruch 1 oder 2, **dadurch gekennzeichnet, dass** jede Druckstange (8) zwei Gewindeenden aufweist, wobei an jedem Gewindeende ein Befestigungsmittel, insbesondere eine Mutter oder eine Befestigungsschraube, angeschraubt ist.

4. Das Holzfass nach Anspruch 3, **dadurch gekennzeichnet, dass** das horizontale Durchgangsloch (12) des Vertikalträgers (7) einen Fräsbereich (11) zur Aufnahme des Befestigungsmittels aufweist.

5. Das Holzfass nach Anspruch 1, **dadurch gekennzeichnet, dass** jede Halbblindschiebe-Halbschwalbenschwanzverbindung (16) einen halbschwalbenschwanzförmigen Schwanz (20) und eine entsprechend halbschwalbenschwanzförmige Aufnahme (22) umfasst, wobei der Halbschwalbenschwanzabschnitt (21) jedes Schwanzes (20) zur Außenseite der unteren, vorderen und/oder hinteren Platte (2, 3, 4) ausgerichtet ist.

6. Das Holzfass nach Anspruch 5, **dadurch gekennzeichnet, dass** eine erste Halbblindschiebe-Halbschwalbenschwanzverbindung (16) eine erste halbschwalbenschwanzförmige Aufnahme (22) umfasst, die an der Innenseite nahe der vorderen Kante der oberen Platte (1) angeordnet ist, und einen ersten halbschwalbenschwanzförmigen Schwanz (20) umfasst, der an der oberen Kante der vorderen Platte (3) angeordnet ist,
eine zweite Halbblindschiebe-Halbschwalbenschwanzverbindung (16) eine zweite halbschwalbenschwanzförmige Aufnahme (22) umfasst, die an der Innenseite nahe der hinteren Kante der oberen Platte (1) angeordnet ist, und einen zweiten halbschwalbenschwanzförmigen Schwanz (20) umfasst, der an der oberen Kante der hinteren Platte (4) angeordnet ist,
eine dritte Halbblindschiebe-Halbschwalbenschwanzverbindung (16) eine dritte halbschwalbenschwanzförmige Aufnahme (22) umfasst, die an der Innenseite nahe der unteren Kante der vorderen Platte (3) angeordnet ist, und einen dritten halbschwalbenschwanzförmigen Schwanz (20) umfasst, der an der vorderen Kante der unteren Platte (2) angeordnet ist, und
eine vierte Halbblindschiebe-Halbschwalbenschwanzverbindung (16) eine vierte halbschwalbenschwanzförmige Aufnahme (22) umfasst, die an der Innenseite nahe der unteren Kante der hinteren Platte (4) angeordnet ist, und einen vierten halbschwalbenschwanzförmigen Schwanz (20) umfasst, der an der hinteren Kante der unteren Platte (2) angeordnet ist.

7. Das Holzfass nach Anspruch 1, **dadurch gekennzeichnet, dass** jede angefaste Nutverbindung (17) einen angefasten Schwanz (23) und eine entsprechend angefaste Aufnahme (25) umfasst, wobei der angefaste Abschnitt (24) jedes Schwanzes (23) zur Außenseite der vorderen und/oder hinteren Platte (3, 4) ausgerichtet ist, wobei die angefaste Nutverbindung (17) entweder eine durchgehende Verbindung entlang der gesamten Seitenkante der vorderen und/oder hinteren Platte (3, 4) ist, oder eine gestoppte Verbindung nahe der unteren Kante der vorderen und/oder hinteren Platte (3, 4) ist.

8. Das Holzfass nach Anspruch 7, **dadurch gekennzeichnet, dass** eine erste angefaste Nutverbindung (17) eine erste angefaste Aufnahme (25) umfasst, die an der Innenseite nahe der vorderen Kante einer der Seitenplatten (5) angeordnet ist, und einen ersten angefasten Schwanz (23) umfasst, der an einer der Seitenkanten der vorderen Platte (3) angeordnet ist,
eine zweite angefaste Nutverbindung (17) eine zweite angefaste Aufnahme (25) umfasst, die an der Innenseite nahe der hinteren Kante einer der Seitenplatten (5) angeordnet ist, und einen zweiten angefasten Schwanz (23) umfasst, der an einer der Seitenkanten der hinteren Platte (4) angeordnet ist,
eine dritte angefaste Nutverbindung (17) eine dritte angefaste Aufnahme (25) umfasst, die an der Innenseite nahe der vorderen Kante der anderen der Seitenplatten (5) angeordnet ist, und einen dritten angefasten Schwanz (23) umfasst, der an der anderen der Seitenkanten der vorderen Platte (3) angeordnet ist, und eine vierte angefaste Nutverbindung (17) eine vierte angefaste Aufnahme (25) umfasst, die an der Innenseite nahe der hinteren Kante der anderen der Seitenplatten (5) angeordnet ist, und einen vierten angefasten Schwanz (23) umfasst, der an der anderen der Seitenkanten der hinteren Platte (4) angeordnet ist.

9. Das Holzfass nach Anspruch 1, **dadurch gekennzeichnet, dass** die obere Platte (1) unter einem Winkel α im Bereich von 90,5° bis 135°, insbesondere im Bereich von 90,5° bis 100°, zur Innenseite der hinteren Platte (4) geneigt ist, wobei die untere Platte (2) unter einem Winkel β im Bereich von 90,5° bis 135°, insbesondere im Bereich von 90,5° bis 100°, zur Innenseite der hinteren Platte (4) geneigt ist.

10. Das Holzfass nach den Ansprüchen 1, 5 oder 6, **dadurch gekennzeichnet, dass** der Schwalbenschwanzwinkel γ des Halbschwalbenschwanzabschnitts (21) jedes Schwanzes (20) zur Außenseite der unteren, vorderen und/oder hinteren Platte (2, 3, 4) im Bereich von 0,5° bis 45°, insbesondere im Bereich von 5° bis 25°, liegt.

11. Das Holzfass nach den Ansprüchen 1, 7 oder 8, **dadurch gekennzeichnet, dass** der Fasenwinkel δ des angefasten Abschnitts (24) jedes Schwanzes (23) zur Seitenkante der vorderen und/oder hinteren Platte (3, 4) im Bereich von 91° bis 179°, insbesondere im Bereich von 110° bis 140°, liegt.

12. Das Holzfass nach einem der vorhergehenden Ansprüche, **dadurch gekennzeichnet, dass** das Füllloch (14) dazu eingerichtet ist, einen mit einer Blindmutter (28) mit einem Deckel (30) abgeschlossenen Einfüllstutzen (27) aufzunehmen, wobei innerhalb des Einfüllstutzens (27) ein Umkehrkonus (29) angeordnet ist, wobei die vertikale Achse des Fülllochs (14) parallel zur vorderen Platte (3) ist.

13. Das Holzfass nach Anspruch 12, **dadurch gekennzeichnet, dass** in der Innenseite der oberen Platte (1) zwischen dem Füllloch (14) und der Ecke der Innenseiten der oberen und vorderen Platte (1, 3) eine Entlüftungsvertiefung (33) angeordnet ist.

14. Das Holzfass nach einem der vorhergehenden Ansprüche, **dadurch gekennzeichnet, dass** das Ablaufloch (15) mit einem Gewinde versehen und dazu angepasst ist, um einen mit einem Gewinde versehenen Ablaufstützen (31) aufzunehmen, der an der Außenseite der vorderen Platte (3) mittels eines Flansches (32) befestigbar ist, wobei eine mit einem Gewinde versehene zylindrische Nut (34) in der Innenseite der unteren Platte (2) nahe der vorderen Kante davon angeordnet und dazu angepasst ist, um den mit einem Gewinde versehenen Ablaufstützen (31) aufzunehmen, wobei die untere Kante des Innenradius des mit einem Gewinde versehenen Ablaufstützens (31) in Kontakt mit der unteren Kante der vorderen Platte (3) angeordnet ist und eine ununterbrochene Fortsetzung der Innenseite der unteren Platte (2) bildet, wobei das Ablaufloch (15) parallel zur unteren Kante der vorderen Platte (3) angeordnet ist.

15. Das Holzfass nach einem der vorhergehenden Ansprüche, **dadurch gekennzeichnet, dass** das obere Ende (10) des Vertikalträgers (7) mit einem Zapfen (18) versehen ist und das untere Ende (9) des Vertikalträgers (7) mit einem Schlitz (19) versehen ist, um zwei Vertikalträger (7) entlang ihrer vertikalen Achsen zu verbinden, wobei der Zapfen (18) und der Schlitz (19) kegelstumpfförmig sind.

16. Das Holzfass nach einem der vorhergehenden Ansprüche, **dadurch gekennzeichnet, dass** die obere Platte (1), die untere Platte (2), die vordere Platte (3), die hintere Platte (4) und die zwei Seitenplatten (5) als Leimholzplatten aus Streifen (35) ausgebildet sind, die mit einer Längs-Mehrfach-Nut-Feder (37) - Verbindung (36) verbunden sind, wobei die Streifen (35) der oberen und der unteren Platte (1, 2) senkrecht zu den Druckstangen (8) ausgerichtet sind, die Streifen (35) der beiden Seitenplatten (5) senkrecht zu den Vertikalträgern (7) ausgerichtet sind und die Streifen (35) der vorderen und hinteren Platten (3, 4) parallel zu ihren Seitenkanten ausgerichtet sind, und wobei die mehreren Nuten-und-Feder (37) nur rechtwinklige Flächen umfassen.

## Revendications

1. Un fût en bois pour le stockage et le vieillissement du vin et d'autres boissons, comprenant :
a. un panneau supérieur (1), un panneau inférieur (2), un panneau avant (3), un panneau arrière (4) et deux panneaux latéraux (5), chacun pourvu de faces externes et internes sensiblement planes et tous assemblés de manière à définir un volume de stockage interne (6), où le panneau avant (3), le panneau arrière (4) et les deux panneaux latéraux (5) définissent un bord supérieur et un bord inférieur, le panneau supérieur (1) et le panneau inférieur (2) définissent un bord avant et un bord arrière, et le panneau avant (3) et le panneau arrière (4) définissent deux bords latéraux, et où le panneau supérieur (1) est incliné vers le haut à partir du bord arrière vers le bord avant et le panneau inférieur (2) est incliné vers le bas à partir du bord arrière vers le bord avant;
b. au moins deux paires associées de poutres verticales (7), ayant chacune deux extrémités (9, 10) et formant un contrefort contre les faces externes des deux panneaux latéraux opposés (5), où chaque poutre verticale (7) est reliée à une autre poutre verticale (7) prenant appui contre la face externe d'un panneau latéral opposé (5), formant ainsi une paire de poutres verticales associées (7);
c. au moins deux tiges de compression (8) par paire associée de poutres verticales (7), où chaque extrémité (9, 10) de la poutre verticale (7) est reliée à une autre extrémité (9, 10) de la poutre verticale (7) d'une paire de poutres verticales associées (7) au moyen d'une tige de compression (8) apte à exercer une force horizontale tendant à rapprocher les poutres verticales opposées (7) d'une paire de poutres verticales associées (7) et les panneaux latéraux opposés (5) contre lesquels reposent ces deux poutres verticales (7), où chaque extrémité (9, 10) des poutres verticales (7) est percée d'un trou traversant horizontal (12) et chaque panneau latéral (5) est percé d'une pluralité de trous traversants horizontaux (13), chaque trou traversant horizontal (13) étant aligné avec le trou traversant horizontal voisin (12) de la poutre verticale (7), où les tiges de compression (8) passent à travers les trous traversants horizontaux voisins (12, 13); et
d. au moins un trou de remplissage (14) dans le panneau supérieur (1) à proximité du bord avant de celui-ci et au moins un trou de drainage (15) dans le panneau avant (3) à proximité du bord inférieur de celui-ci;
**caractérisé en ce que** les deux extrémités (9, 10) de chaque poutre verticale (7) s'étendent au-delà des bords inférieur et supérieur du panneau latéral (5) contre lequel est montée la poutre verticale (7),
où les tiges de compression (8) passent à une distance au-dessus de la surface du panneau supérieur (1) le long de la face externe de celui-ci ou au-dessous du panneau inférieur (2) au voisinage des bords inférieurs des panneaux avant, arrière et/ou latéraux (3, 4, 5),
où les joints entre le panneau supérieur (1) et les panneaux avant et arrière (3, 4) et entre le panneau inférieur (2) et les panneaux avant et arrière (3, 4) sont quatre joints en demi-queue d'aronde coulissants semi-aveugles (16), et les joints entre le panneau avant (3) et les panneaux latéraux (5) et entre le panneau arrière (4) et les panneaux latéraux (5) sont quatre joints d'embrèvement chanfreinés (17).

2. Le fût en bois selon la revendication 1, **caractérisé en ce que** la tige de compression (8) passant sous le panneau inférieur (2) au voisinage du bord inférieur du panneau avant (3) est insérée dans une rainure (26) s'étendant le long du bord inférieur des panneaux avant (3).

3. Le fût en bois selon la revendication 1 ou 2, **caractérisé en ce que** chaque tige de compression (8) comprend deux extrémités filetées, où un moyen de fixation, en particulier un écrou ou une vis de fixation, est vissé sur chaque extrémité filetée.

4. Le fût en bois selon la revendication 3, **caractérisé en ce que** le trou traversant horizontal (12) de la poutre verticale (7) comprend une zone fraisée (11) pour recevoir les moyens de fixation.

5. Le fût en bois selon la revendication 1, **caractérisé en ce que** chaque joint en demi-queue d'aronde coulissant demi-aveugle (16) comprend une demi-queue en forme de queue d'aronde (20) et une demi-douille en forme de queue d'aronde correspondante (22), où la partie en demi-queue d'aronde (21) de chaque queue (20) est orientée vers la face externe des panneaux inférieur, avant et/ou arrière (2, 3, 4).

6. Le fût en bois selon la revendication 5, **caractérisé en ce qu'**un premier joint en demi-queue d'aronde coulissant demi-aveugle (16) comprend une première demi-douille en forme de queue d'aronde (22) disposée sur la face interne à proximité du bord avant du panneau supérieur (1) et une première demi-queue en forme de queue d'aronde (20) disposée sur le bord supérieur du panneau avant (3),
un deuxième joint en demi-queue d'aronde coulissant semi-aveugle (16) comprend une deuxième demi-douille en forme de queue d'aronde (22) disposée sur la face interne à proximité du bord arrière du panneau supérieur (1) et une deuxième demi-queue en forme de queue d'aronde (20) disposée sur le bord supérieur du panneau arrière (4),
un troisième joint en demi-queue d'aronde coulissant demi-aveugle (16) comprend une troisième demi-douille en forme de queue d'aronde (22) disposée sur la face interne à proximité du bord inférieur du panneau avant (3) et une troisième demi-queue en forme de queue d'aronde (20) disposée sur le bord avant du panneau inférieur (2), et
un quatrième joint en demi-queue d'aronde coulissant semi-aveugle (16) comprend une quatrième demi-douille en forme de queue d'aronde (22) disposée sur la face interne à proximité du bord inférieur du panneau arrière (4) et une quatrième demi-queue en forme de queue d'aronde (20) disposée sur le bord arrière du panneau inférieur (2).

7. Le fût en bois selon la revendication 1, **caractérisé en ce que** chaque joint d'embrèvement chanfreiné (17) comprend une queue chanfreinée (23) et une douille chanfreinée correspondante (25), où la partie chanfreinée (24) de chaque queue (23) est orientée vers la face externe des panneaux avant et/ou arrière (3, 4), où le joint d'embrèvement chanfreiné (17) est soit un joint traversant le long de l'ensemble du bord latéral du panneau avant et/ou arrière (3, 4), soit un joint arrêté près du bord inférieur du panneau avant et/ou arrière (3, 4).

8. Le fût en bois selon la revendication 7, **caractérisé en ce qu'**un premier joint d'embrèvement chanfreiné (17) comprend une première douille chanfreinée (25) disposée sur la face interne à proximité du bord avant de l'un des panneaux latéraux (5) et une première queue chanfreinée (23) disposée sur l'un des bords latéraux du panneau avant (3),
un deuxième joint d'embrèvement chanfreiné (17) comprend une deuxième douille chanfreinée (25) disposée sur la face interne à proximité du bord arrière de l'un des panneaux latéraux (5) et une deuxième queue chanfreinée (23) disposée sur l'un des bords latéraux du panneau arrière (4),
un troisième joint d'embrèvement chanfreiné (17) comprend une troisième douille chanfreinée (25) disposée sur la face interne à proximité du bord avant de l'autre des panneaux latéraux (5) et une troisième queue chanfreinée (23) disposée sur l'autre des bords latéraux du panneau avant (3), et
un quatrième joint d'embrèvement chanfreiné (17) comprend une quatrième douille chanfreinée (25) disposée sur la face interne à proximité du bord arrière de l'autre des panneaux latéraux (5) et une quatrième queue chanfreinée (23) disposée sur l'autre des bords latéraux du panneau arrière (4).

9. Le fût en bois selon la revendication 1, **caractérisé en ce que** le panneau supérieur (1) est incliné selon un angle α compris dans la plage de 90,5 ° à 135 °, en particulier dans la plage de 90,5 ° à 100 °, par rapport à la face interne du panneau arrière (4), où le panneau inférieur (2) est incliné selon un angle β compris dans la plage de 90,5 ° à 135 °, en particulier dans la plage de 90,5 ° à 100 °, par rapport à la face interne du panneau arrière (4).

10. Le fût en bois selon les revendications 1, 5 ou 6, **caractérisé en ce que** l'angle de queue d'aronde γ de la partie en demi-queue d'aronde (21) de chaque queue (20) par rapport à la face externe des panneaux inférieur, avant et/ou arrière (2, 3, 4) est dans la plage de 0,5 ° à 45 °, en particulier dans la plage de 5 ° à 25 °.

11. Le fût en bois selon les revendications 1, 7 ou 8, **caractérisé en ce que** l'angle de chanfrein δ de la partie chanfreinée (24) de chaque queue (23) par rapport au bord latéral des panneaux avant et/ou arrière (3, 4) est dans la plage de 91 ° à 179 °, en particulier dans la plage de 110 ° à 140 °.

12. Le fût en bois selon l'une quelconque des revendications précédentes, **caractérisé en ce que** le trou de remplissage (14) est adapté pour recevoir un col de remplissage (27) terminé par un écrou borgne (28) avec un couvercle (30), où un cône inversé (29) est disposé à l'intérieur du col de remplissage (27), où l'axe vertical du trou de remplissage (14) est parallèle au panneau avant (3).

13. Le fût en bois selon la revendication 12, **caractérisé en ce qu'**une indentation de désaération (33) est disposée dans la face interne du panneau supérieur (1) entre le trou de remplissage (14) et le coin des faces internes des panneaux supérieur et avant (1, 3).

14. Le fût en bois selon l'une quelconque des revendications précédentes, **caractérisé en ce que** le trou de drainage (15) est fileté et adapté pour recevoir un col fileté (31) fixable à la face externe du panneau avant (3) au moyen d'une bride (32), où une rainure cylindrique filetée (34) est disposée dans la face interne du panneau inférieur (2) à proximité du bord avant de celui-ci et adapté pour recevoir le col fileté (31), où le bord inférieur du rayon interne du col fileté (31) est en contact avec et forme un prolongement ininterrompu de la face interne du panneau inférieur (2), où le trou de drainage (15) est disposé parallèlement au bord inférieur du panneau avant (3).

15. Le fût en bois selon l'une quelconque des revendications précédentes, **caractérisé en ce que** l'extrémité supérieure (10) de la poutre verticale (7) est pourvue d'un tenon (18) et l'extrémité inférieure (9) de la poutre verticale (7) est pourvue d'une mortaise (19) pour relier deux poutres verticales (7) le long de leurs axes verticaux, où le tenon (18) et la mortaise (19) sont de forme tronconique.

16. Le fût en bois selon l'une quelconque des revendications précédentes, **caractérisé en ce que** le panneau supérieur (1), le panneau inférieur (2), le panneau avant (3), le panneau arrière (4) et les deux panneaux latéraux (5) sont construits sous la forme de panneaux lattés constitués de bandes (35) reliées à un joint (36) longitudinal multiple à languette et rainure (37), où les bandes (35) des panneaux supérieur et inférieur (1, 2) sont orientées perpendiculairement aux tiges de compression (8), les bandes (35) des deux panneaux latéraux (5) sont orientées perpendiculairement aux poutres verticales (7) et les bandes (35) des panneaux avant et arrière (3, 4) sont orientées parallèlement aux bords latéraux de celles-ci, et où les multiples languettes et rainures (37) comprennent uniquement des faces à angle droit.
